(19) Europäisches Patentamt
European Patent Office
Office européen des brevets

(11) Publication number: **0 536 851 A2**

(12) **EUROPEAN PATENT APPLICATION**

(21) Application number: **92203124.0**

(22) Date of filing: **10.10.92**

(51) Int. Cl.$^5$: **A23L 1/212**, A23L 1/015, A23L 1/211

(30) Priority: **11.10.91 GB 9121586**
**22.04.92 GB 9208650**

(43) Date of publication of application:
**14.04.93 Bulletin 93/15**

(84) Designated Contracting States:
**PT**

(71) Applicant: **MATFORSK NORWEGIEN FOOD RESEARCH INSTITUTE**
**Osloveien 1**
**N-1329 As(NO)**

(72) Inventor: **Slinde, Erik**
**Natlandsfjellet 44**
**N-5030 Landas(NO)**
Inventor: **Aukrust, Thea**
**Ingierkollveien 90**
**N-1410 Kolbotn(NO)**
Inventor: **Skrede, Grete**
**Arneborgveien 10**
**N-1430 As(NO)**
Inventor: **Baardseth, Pernille**
**Tamburbakkan 17**
**N-1440 Drobak(NO)**
Inventor: **Enersen, Grethe**
**Hogstvetveien 20**
**N-1430 As(NO)**

(74) Representative: **Cockbain, Julian, Dr. et al**
**Frank B. Dehn & Co. Imperial House 15-19, Kingsway**
**London WC2B 6UZ (GB)**

(54) **Method of vegetable processing.**

(57) Processed vegetables are subjected to a fermentation step, preferably in a solution of brine or buffer inoculated with lactic acid bacteria, prior to cooking in fat. The fermentation step lowers the amount of reducing sugars on the surface of the vegetable so that over-browning does not occur during cooking. This also permits the use of vegetables such as carrots which contain relatively high levels of reducing sugars, for example 1.5% by weight.

EP 0 536 851 A2

The present invention relates to a method of treating plant matter, especially carrots, prior to cooking with fat.

Many vegetable food products are cooked with fat either prior to storage or immediately before consumption. Generally vegetable products are cooked in this way by frying, often by deep fat frying, although shallow frying or roasting may also be used, and the term "frying" as used herein encompasses all types of cooking with fat or oil including shallow frying, deep fat frying and roasting.

One reason for cooking vegetables in fat is to create a product with suitable organoleptic properties and of a pleasing golden-brown colour. French fries and potato crisps (chips) are examples of such products which can be produced commercially.

The browning of the vegetable is of great importance commercially since the end-product must be attractive and pleasing to the eye of the customer. Browning occurs due to the carbonisation or burning of sugars, especially reducing sugars, present on the surfaces of the vegetable product. The reducing sugars responsible for the majority of the browning process are glucose and fructose. Other reducing sugars are present in only minute quantities and thus do not contribute significantly to the browning process. Where the vegetable matter has been processed, for example by peeling, slicing or chopping, then reducing sugars will be present on the cut surfaces of the vegetables.

However, a major disadvantage to cooking vegetables in hot oil is that at the high temperatures used - approximately 100-200 °C - browning and over-browning due to the Maillard reaction occurs very quickly leading to an unattractive dark brown or blackened end-product which may also have an unpleasant charred or burnt taste.

Deep fat frying products with too high a proportion of surface reducing sugars invariably results in an unacceptably charred product and it is for this reason that potato varieties which have a relatively low level of reducing sugars are the only vegetable currently used for the commercial production of fried vegetable products. Only potatoes with a reducing sugar content of 0.5% or lower such as 0.1-0.25% are considered to be suitable for use in crisp manufacture. Other varieties of potato or different vegetables have been considered to have reducing sugar contents which are too high for the commercial preparation of fried products.

Previous attempts to address the problem of over-browning due to high levels of reducing sugars have thus been limited to potatoes and these attempts have primarily focused on varietal and crop selection and on storage. Thus, it is common practice for the potatoes to be kept in cold storage prior to use in the frying process. Although cold storage increases the levels of reducing sugars present within a potato and leads to a risk of over-browning, a low temperature during storage is necessary to prevent potato sprouting and to reduce the growth of potato pathogens. In certain countries potatoes may also be chemically treated to prevent sprouting and/or microbial spoilage. At higher temperatures ie. ambient temperature the sugar conversion process is reversed, leading to a net decrease in reducing sugar content within the potato and thus giving a lower risk of over-browning. The reconditioning of potatoes by storage at ambient temperature (for example at 10-22 °C) after previous cold storage is thus common practice. However, the levels of reducing sugars will still vary between individual potatoes and potato varieties.

To produce a uniformily browned fried potato product, GB-A-1273998 suggests heating potato pieces to produce a coating of gelatinized starch. The potato pieces are then formed into a dough which is shaped and fried to yield a uniform product. Although this approach overcomes the variation in reducing sugar compositions within the potatoes used, the process is involved, time-consuming and expensive.

We have however now found that it is possible to produce commercially pre-fried vegetable products, even using vegetables such as carrots which contain high levels of reducing sugars. Non-tuberous vegetables are particularly suitable and mention may be made of vegetables which are bulbs (eg. onion), rhizomes (eg. carrot), stems (eg. Kohirabi) fruit (eg. pepper), seeds (eg. beans, peas or sweet corn) and flowers (eg. cauliflower). Particularly suitable vegetables include celeriac, turnip, swede, parsnip, onion and garlic.

Thus we have found that pre-frying fermentation of high reducing sugar level plant matter can be so effected as to reduce the surface sugar-level sufficiently for a satisfactory fried product to be obtained, satisfactory that is in terms of visual appearance, taste and other organoleptic properties.

Thus, viewed from one aspect the invention provides a method of producing a fried vegetable product comprising fermenting vegetable matter, especially a vegetable which is a rhizome or bulb, preferably processed vegetable matter, containing at least 1.5%, especially at least 2%, particularly at least 2.5% and more particularly at least 3.0%, by weight of reducing sugars, and subsequently frying the fermented product.

Preferably the vegetable matter is processed prior to fermentation, eg. it may be peeled, sliced, chopped, cut, chipped or divided by any means.

A comparison between the percentage of reducing sugars, calculated as gram reducing sugar per 100 gram wet weight, typically present in potatoes and carrots (which possess a high level of reducing sugars) is given below:

| PRODUCT | % Reducing Sugars | | |
|---|---|---|---|
| | Glucose | Fructose | Total |
| Potato | 0.43 | 0.47 | 0.90 |
| Carrot | 2.03 | 1.79 | 3.82 |
| Swede | 4.44 | 3.08 | 7.52 |

Thus the total amount of reducing sugar present in carrots is greater than that in potatoes by a factor of approximately 4 while the amount in swede is greater by a factor of approximately 8.

The potatoes used in the above evaluation were of the Bintje variety, which is the most widely used variety of potatoes for the commercial production of fried potato products, such as potato chips and pommes frites, in Europe. The potatoes had been cold stored for 10-11 months prior to the experiment. (Cold storage will increase the proportion of reducing sugars present in a potato). Nantes Duke variety carrots were tested. These were stored under normal conditions prior to the experiment.

However while the method of the present invention is particularly suited to the production of fried carrot, celeriac and onion (especially carrot) products it can of course be used for the production of fried products using other vegetables having a reducing sugar content higher than that for potatoes.

The use of different vegetables processed in any suitable manner permits a variety of shapes, colours and flavours for the final product. Artificial flavours may of course be added and can be selected to concord with the particular vegetable and cut used - for example carrots processed into lengthwise strips could be bacon flavoured to give a product which resembles crispy bacon.

The fermentation process used in the present invention may last for a period of a few, e.g. 1 or 2, hours to 6 days, although generally 1-3 days are sufficient and as short as possible a fermentation period is desirable. Preferably the length of the fermentation process for carrots is selected to achieve a *b (III) value of 20-30, especially 22-29, after frying.

Fermentation can be carried out by any food grade micro-organism capable of utilising reducing sugars to produce tolerable organic acids (such as lactic or acetic acids) but leaving a desired level of sucrose; lactic acid bacteria (for example Lactococcus, Leuconostoc, Pediococcus and Lactobacillus) however are preferred and homo-fermentative lactic acid bacteria (eg. certain species of Lactobacillus) are especially preferred. Selection of suitable bacteria will of course influence the fermentation process. The present invention may be conveniently performed using the strains Lactobacillus plantarum strains NCDO 1752 or NCDO 1193, both deposited and available from the National Collection of Dairy Organisms (now known as the National Collection of Food Bacteria).

Fermentation may be conveniently initiated by inoculation, usually from a stock solution of active bacteria into a fermentation medium of water or a brine or aqueous salt solution such as is generally used in fermentations to which the vegetable matter to be fermented is then added. By "brine" is meant a simple aqueous salt solution, for example a solution of sodium chloride, calcium chloride, calcium hydroxide or a mixture thereof in water. Generally the stock solution contains about $10^9$ cells/ml with approximately 1.0 ml stock solution per kg vegetable matter being required for successful inoculation although obviously a larger inoculum may also be used.

The fermentation medium used may also be a buffer, for example a phosphate buffer. The use of a buffered fermentation medium results in lowered reducing sugar content so that harsher frying conditions are acceptable.

The fermentation process is most conveniently carried out at ambient temperature, but incubation at temperatures of up to 35° C may be advantageous in some cases.

Depending on the surface area: volume ratio of the prepared vegetable pieces, the time required for fermentation will be influenced by the volume of fermentation medium. Thus, fermentation time can be controlled by alteration of the volume of medium for a given size and shape of vegetable piece.

It has also been found that washing the vegetables in water or an aqueous solution such as brine after fermentation is complete achieves a further improvement in the appearance of the end-product upon frying.

The fermented vegetables may also be dried after frying to produce a pleasing light, bright colour. Typically the fried fermented vegetables may be dried at 100° C for 20 minutes. Where the vegetables have been fermented in a buffer solution, a drying step may not be required. Drying of fermented vegetables before frying can also be carried out - this removes excess fermentation medium to prevent spitting during the frying stage. However, a much improved visual appearance occurs where the vegetables are subjected to a drying stage after frying is complete.

Frying of the fermented vegetable matter may be carried out using conventional techniques. Conveniently, the fermented vegetable matter may be deep-fried in oil, for example palm oil, at 150-200°C, especially at 160-180°C for 2 to 5 minutes.

Thus in a preferred embodiment the method of the present invention comprises placing peeled sliced carrot into brine inoculated with a culture of Lactobacillus sp., fermenting the inoculate for 2 days, subsequently washing the carrot in brine or water, and frying the washed carrot.

Viewed from another aspect, the present invention provides a novel strain of Lactobacillus (and variants thereof) which is particularly suitable for use in the method of the invention. The new strain, which was deposited at the National Collections of Industrial and Marine Bacteria on 30 September 1991 under Deposit No. 40450, is particularly fast growing and so is well suited to ferment available reducing sugars quickly. Biologically pure cultures and variants of the novel strain can be prepared by techniques standard within the art.

Viewed from a further aspect, the present invention provides the use of Lactobacillus strain NCIMB 40450 or variants thereof in the method of the invention.

Viewed from yet another aspect, the present invention provides a pre-fermented fried vegetable, especially a vegetable which is a rhizome or bulb, produced according to the method of the present invention, wherein the vegetable contains at least 1.5%, especially at least 2%, particularly at least 2.5% and more particularly at least 3% by weight of reducing sugars, especially glucose and fructose, immediately prior to the fermentation step.

In a preferred embodiment, the present invention provides pre-fermented fried carrot produced according to the method of the invention.

It is, of course, preferred that the vegetable matter is processed prior to fermentation and washed in water or brine after fermentation and prior to frying.

Where the fried vegetables used contain $\beta$-carotene - for example carrots and swede - it has been found that the method according to the present invention results in an increased amount of retinol equivalents per unit weight of vegetable. The increase is due to minor losses in carotenoids and decreases in water and sugar content. Recently there has been much interest in the use of retinols such as vitamin A as a cancer preventative in food (see Caragay, Food Technology, April 1992, p55). Thus, the relative concentration of retinol equivalents by the method of the present invention produces a foodstuff which is rich in this component and is therefore particularly suitable in dietary cancer prevention.

Viewed from a further aspect the present invention therefore provides the use of $\beta$-carotene-containing pre-fermented fried vegtetable as a cancer preventative food.

Viewed from another aspect the present invention also provides a method of combatting cancer in the human or non-human, preferably mammalian, animal body which method comprises the consumption by said body of a $\beta$-carotene-containing pre-fermented fried vegetable.

The invention is further illustrated by the following non-limiting Examples and drawings, in which:-

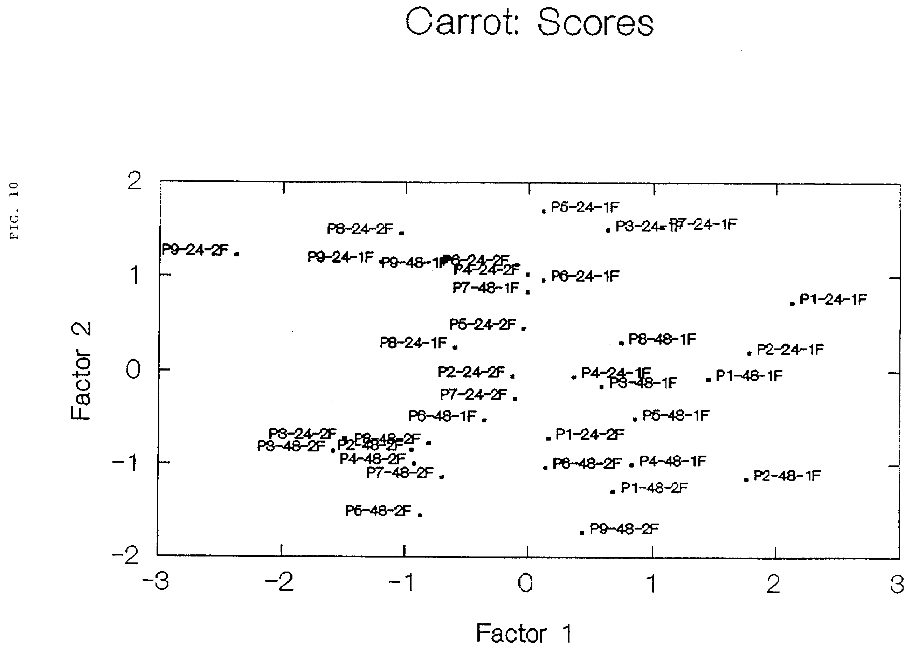

Figures 1 to 8 are graphs and Figures 9 and 10 are statistical plots. Figures 1 and 2 illustrate the changes in the reducing sugars glucose and fructose and in viable cell number and pH of brine for carrot slices incubated with Lactobacillus strains NCIMB 40450, NCDO 1193 or NCDO 1752. Figure 3 illustrates the chromaticity of fermented carrot slices fried with and without rinsing and Figure 4 illustrates the relationship between reducing sugar concentration in carrots slices before frying and the *b value obtained. Figure 5 shows how the reducing sugar content is influenced by fermentation in brine of differing osmolality. The influence of brine osmolality in the fat content of carrot slices is illustrated in Figures 6a and 6b, whilst Figures 7a, 7b and 8 show how the yield of carrot chips is affected by brine composition. Figures 9 and 10 are statistical plots of the effect of different variables on fried carrots.

Example 1 - Chipped Carrots

Day 0

Fresh, uncooked carrots were rinsed, scraped and sliced into 1.5 mm thin slices and divided into three preservation jars. The carrots in one jar were covered with brine consisting of 3% NaCl and 50 mM $CaCl_2$ - (non fermented control). The carrots in the two other jars were covered with the same brine inoculated with fresh growing cells of Lactobacillus strain NCIMB 40450 to $A_{600}$ = 0.28 (approximately $10^8$ cells/ml were present, as evaluated from a standard curve). The jars were kept at ambient temperature.

Day 1 (28 hours fermentation)

The fermentation was monitored by measuring the pH (Table 1) and the viable count (Table 2) in the brine.

Day 2 (51 hours fermentation)

The pH and viable count in the brine were measured as in day 1 (Tables 1 and 2). Freshly sliced carrots, carrots in brine, fermented carrots (1) and fermented and washed carrots (2) were fried in oil at different temperatures and frying times. Samples of the carrots before frying were frozen for later analysis of carbohydrate content on HPLC (Table 4). After frying, the resulting carrot chips were subjected to visual and sensory evaluation, packed in sealed aluminium bags and kept at ambient temperature until colour measurement.

Colour was measured according to the CIE (1976) L*a*b* system using a HunterLab LabScan II Sphere Spectrocolorimeter with illuminant C, specular reflection included. In this system L* describes lightness: L* = 0 for black, L* = 100 for white. Positive a* values describe intensity in red, while negative a* values describe intensity in green. Positive b* values describe intensity in yellow, while negative b* values describe intensity in blue. Hue value is calculated as the angle having tangent b*/a*. Hue values from 0° and 90° correspond to hue varying from pure red to pure yellow while hue values between 90° and 180° correspond to hue varying from pure yellow to pure green. Samples were measured in a Petri dish covered by a glass slide.

Table 1 shows the pH reduction under the different conditions used. Since the bacterial fermentation produces organic acids from the reducing sugars, the pH level gives an indication of the degree of fermentation that has occurred.

The viable cell count (Table 2) also gives an indication of the level of completeness of fermentation.

After 2 days, a spontaneous fermentation had begun in the control sample (carrots in brine only) whilst the other fermentations were judged to be complete from the final pH value and the reduction in viable cell count due to cell death.

Table 1

| pH in the brine during fermentation | | | |
|---|---|---|---|
| pH: at day hour | 27/5(1400) | 28/5(1600) | 29/5(1700) |
| Brine | 5.0 | 5.0 | - |
| Carrot in brine | - | 4.9 | 4.0 |
| Fermented (1) | - | 3.9 | 3.6 |
| Fermented (2) | - | 3.9 | 3.7 |

Table 2

| Viable count (cells/ml) in the brine during fermentation | | |
|---|---|---|
| Viable count: at day/hour | 28/5 | 29/5 |
| Carrot in brine | $9.10^6$ cells/ml | $1.10^8$ cells/ml |
| Fermented (1) | $6.10^8$ cells/ml | $3.10^7$ cells/ml |
| Fermented (2) | $2.10^8$ cells/ml | $7.10^7$ cells/ml |

After 2 days of fermentation, the carrot chips were fried at 170°C for 2.5 or 3 minutes. The results are shown in Table 3.

Table 3 - Colour measurement expressed by CIE (1976) L* (whiteness), a* (redness), b* (yellowness) and oral description

| | | Frying temp | Frying time | Colour measurement | | | | Description |
|---|---|---|---|---|---|---|---|---|
| | | | | L* | a* | b* | hue° | |
| 1. | Fresh carrot | 176 °C | 2.5 min | 46.7 | 8.8 | 18.0 | 63.9 | Brown, sweet taste almost caramelised, burnt |
| 2. | Fermented (2) and washed in brine | 176 °C | 2.5 min | 51.2 | 8.1 | 23.2 | 70.8 | Golden, salty, no sweet taste, crisp |
| 3. | Carrot in brine | 170 °C | 2.5 min | 45.3 | 9.3 | 15.7 | 59.2 | Golden, slightly salty, not crisp |
| 4. | Fermented (1) | 170 °C | 2.5 min | 44.6 | 6.8 | 13.6 | 63.3 | Brown/golden, slightly salty, crisp |
| 5. | Fermented (2) and washed in brine, then in water | 170 °C | 2.5 min | 42.8 | 6.8 | 12.6 | 61.7 | Light golden colour, less salty than the other treated carrots, crisp |
| 6. | Carrot in brine | 170 °C | 3 min | 37.8 | 4.4 | 5.3 | 48.2 | Brown/black, burnt taste, crisp |
| 7. | Fermented (1) | 170 °C | 3 min | 37.5 | 2.8 | 4.3 | 56.7 | Brown/black, burnt taste, crisp |
| 8. | Fermented (2) and washed in brine | 170 °C | 3 min | 46.2 | 8.0 | 16.6 | 64.2 | Light brown, not burnt, salty, crisp |

It is clear from the results given in Table 3 that fermented carrots were less burnt than either fresh carrot or the control sample of carrots in brine only. Lengthening the cooking time to three minutes increased the degree of burning in all samples although the sample which was fermented and subsequently washed gave the best result.

Analysis of the sugar content is given in Table 4 and demonstrates the reduction in available reducing sugar due to fermentation. A further reduction in the sugar detected was observed when the fermented carrot slices were washed in brine after fermentation and this explains the improved colour properties of the washed fermented carrots.

Table 4

| Sugar content (g/100 g) of carrots | | | | |
|---|---|---|---|---|
| | Sucrose | Glucose | Fructose | Total reducing sugars |
| Fresh carrot | 1.74 | 2.03 | 1.79 | 3.82 |
| Carrot in brine | 1.28 | 1.62 | 1.34 | 2.96 |
| Fermented | 0.87 | 0.64 | 0.53 | 1.17 |
| Fermented and washed | 0.58 | 0.40 | 0.31 | 0.71 |

Example 2 - Chipped Carrots

Carrots (Daucas carota L.) of the Fontana variety, grown for industrial processing were obtained directly after harvest. The roots were stored dark at 2°C until processing. Carrots were washed, mechanically peeled and cut into 1.5mm thick slices in a Robot Vertical Cutter 2 (Robot Coupe SA, Jackson, MS).

The Lactobacillus strains used in the experiments were the vegetable strains NCDO 1193 and NCDO 1752 from the National Collection of Food Bacteria, and NCIMB 40450 isolated from fermented carrots at Matforsk. Strains were grown in MRS Broth (de Man et al. J. Appl. Bacteriol 23:130 1960) and harvested by centrifugation before inoculation of the brine (3% (w/v) NaCl and 50 mM $CaCl_2$).

Carrot slices were fermented with Lactobacillus strains NCIMB 40450, NCDO 1752 or NCDO 1193. After 24, 48 and 72 hour incubation at ambient temperature, cell number and pH of brine were measured and carrot slices for sugar analysis and deep frying were sampled. The carrot slices were analyzed and deep fried either directly from the brine or after rinsing with water. Colour of carrot chips was determined.

Total changes in sugars during fermentation were also calculated from sugar analysis of both carrot slices and brine. Samples were taken 18, 24, 48 and 72 hours after inoculating the reaction mixture with the NCIMB 40450 strain.

Carrot slices in 2 L glass jars were covered with the salt brine which had previously been inoculated to $10^7$ cells/ml ($A_{600}$ = 0.1 measured in a Beckman Spectrophotometer (Beckman-Riic Ltd, Fife, Great Britain). The carrot slices to brine ratio in jars was 1:1.5(w/v). The jars were kept at ambient temperature. The number of viable cells was evaluated by spreading serial dilutions of the brine onto MRS agar plates. The plates were incubated at 30°C and colonies counted after two days. pH was measured using a Beckman 3560 Digital pH Meter equipped with a glass electrode.

Palm oil (melting point 20°C) was heated to 180°C in an Elframo EB (Elframo Bergamo, Italy) cooking pan. Portions of 50g carrot slices were deep fried and a total of six portions could be fried simultaneously. The frying time (2 min 15 sec) was controlled by a stop watch.

Glucose, fructose and sucrose were determined by HPLC using a Sugar-Pak 1 (6.5mm x 30cm) column (Waters, Milford, MA). The column is claimed by the producer to be equivalent to that specified by A.O.A.C. (1980). The column was operated at 90°C with 0.1 mM Ca-EDTA in water as the mobile phase (0.5mL/min, SP 8700 solvent delivery system, Spectra-Physics, San Jose, CA). Sugars were deteded by a Gilson 132 refractive index dectector (Gilson Medical Electronics Inc. Middelton, WI). Quantitations were made by a HP 33655 ChemStation integration system (Hewlett-Packard, North Hollywood, CA) using glucose, fructose and sucrose as standards. Samples were prepared by homogenizing carrot slices in water (1:5 w/w) and filtering. Sep-Pak Plus Alumina A cartridges (Waters, Milford, MA) were used to remove salts and acids of the filtrate prior to injection.

CIE (1976) L*a*b* colour parameters were obtained using a Hunterlab LabScan II Sphere Spectrocolorimeter (Hunter Ass. Lab. Inc., Reston, VA) in the reflection mode (Baardseth et al. J Food Sci 53:1737 1988). Specular reflection was included during measuring and calculations were based on light source C (Hunter and Harold The Measurement of Appearance, Wiley, 1987). The measuring area was 25mm in diameter and the instrument was calibrated towards a white standard.

Carrot chips were crushed, or cut with scissors when not crips, into 1-2 mm pieces (Francis and Clydesdale, Food Colorimetry: Theory and Application, Chapter 24, AVI Pub. Co. Inc. 1975) and filled into a 50 mm wide and 10 mm deep Petri dish covered with a glass slide. Samples were measured towards a white background. The glass slide decreased lightness L* by 1.2, red-green chromaticity a* by 0.8, while yellow-blue chromaticity was unaffected. The effect of the glass slide on colour values for carrot slices and chips were not corrected for.

Results

Fermentation reduced sugar concentrations of carrot slices (Table 5). Average reductions of about 60% for sucrose and fructose were obtained after 72 hours fermentation with the three Lactobacillus strains. Rinsing of slices with water prior to analysis, reduced sugar contents of both fresh and fermented carrot slices. Rinsing alone, however, did not reduce sugars to the levels obtained by fermentation of the carrot slices.

Sugar concentration of the fermenting brine increased during the fermentation period (Table 6). After 48 hours an equilibrium between total sugar concentration of brine and of carrot slices was reached. Calculations revealed that the sum of sucrose, glucose and fructose in carrots and brine, comprised about 60% of the sugars initially present in the carrots.

The results showed that during the early stages of fermentation, strain NCIMB 40450 was the most efficient in lowering the amount of the reducing sugars glucose and fructose of carrot slices (Fig. 1). Upon extended fermentation, however, the total decrease in reducing sugar content was highest for strain NCDO 1193, followed by NCDO 1752 and NCIMB 40450.

The extent of fermentation was reflected in the pH and viable counts of the fermenting brine (Fig. 2). All Lactobacillus strains caused pH drops from 5.4 to about 4.0 during the first 24 hours of fermentation. Within the same period of time, the viable cell number of the brines increased logarithmically for all strains. The bacterial growth caused a simultaneous decrease in pH. After 24 hours fermentation, viable cell number for strain NCIMB 40450 decreased and pH remained nearly constant. For strains NCDO 1752 and NCDO 1193, however, a logarithmic growth was seen also after 24 hours incubation. When the experiments were terminated after 72 hours incubation, the pH of the brine for these two strains were 0.7 units lower than that of strain NCIMB 40450.

In the CIE (1976) L*a*b* system, the orange/brownish carrot chips color was described by the lightness term L* and by positive values of the chromaticity parameters for red, a*, and yellow b* (Table 7). Fermentation caused increased lightness and yellow chromaticity, compared to unfermented chips. Rinsing the slices prior to deep frying, increased lightness and yellow chromaticity of both fermented and unfermented chips.

The colour of the chips was influenced by the Lactobacillus strain used for fermentation (Fig. 3). After 24 hours fermentation, chips fermented with strains NCDO 1193 and NCIMB 40450 were more light (Higher L*) and had a higher intensity in yellow (higher b*) than chips fermented with strain NCDO 1752. Fermentation beyond 48 hours, however, caused reduced lightness and yellow chromaticity of the chips, and the differences between the strains decreased. Red chromaticity (a*) was less influenced by fermentation at all stages of the process regardless of the three strains of lactic acid bacteria used.

Rinsing of carrot slices prior to deep frying, increased the effect of fermentation on colour (Fig. 3). After 24 hours chips produced with strain NCIMB 40450 were more light and yellow than those produced with strains NCDO 1193 and NCDO 1752.

Regression analysis revealed a linear relationship between L* and b* values of carrot chips colour. The regression was $L^* = 33.4 + 0.67\ b^*$, with a correlation coefficient of $r = 0.998$ ($n = 44$). For L* and a* the regression was $L^* = 33.7 + 0.87\ a^*$ ($r = 0.667$, $n = 44$). Thus, L* and b* values most consistently described chip colour, and b* values were chosen to describe colour of carrot chips in the further study.

The increase in yellow colour of the chips during the initial fermentation period (Fig. 3c) occurred simultaneously with the decrease in reducing sugars of the carrot slices (Fig. 1). Calculations revealed a linear relationship between b* values of chips and reducing sugars concentration (conc.) of slices after 24 hours fermentation (Fig. 4). The regression was $b^* = 33.9 - 5.96$ conc. ($r = 0.941$, $n = 8$). As the fermentation period was prolonged beyond 24 hours the yellow chromaticity decreased despite the low sugar levels. The overall relationship between sugar and colour of chips prepared after 24, 48 and 72 hours fermentation (Fig. 4) was less defined ($b^* = 25.3 - 2.0$ conc.; $r = 0.485$, $n = 20$).

TABLE 5

Average sucrose, glucose and fructose concentrations and standard error of the mean (sem) of carrot slices before and after 72 hours fermentation with the *Lactobacillus* strains NCIMB 40450, NCDO 1193 or NCDO 1752

| Fermentation period/strain | Concentration (g/100 g) | | |
|---|---|---|---|
| | Sucrose (sem) | Glucose (sem) | Fructose (sem) |
| Without rinsing | | | |
| 0 h | 2.41 (0.17) | 1.50 (0.05) | 1.56 (0.02) |
| 72 h | 0.99 (0.17) | 0.37 (0.08) | 0.34 (0.12) |
| With rinsing | | | |
| 0 h | 1.87 (0.07) | 1.09 (0.02) | 1.05 (0.01) |
| 72 h | 0.69 (0.13) | 0.25 (0.10) | 0.23 (0.15) |

TABLE 6

Total sugar concentration (sucrose, glucose, fructose) and pH in brine and carrot slices during fermentation with *Lactobacillus* strain NCIMB 40450. Standard deviation (SD) for sugars in carrots are given.

| Fermentation period | Sugar conc. in brine (g/100 g) | Sugar conc. in carrot slices (g/100 g)(SD) | pH |
|---|---|---|---|
| 0 h | - | 5.72 (0.03) | 5.78 |
| 18 h | 0.73 | 3.51 (0.04) | 3.90 |
| 24 h | 1.30 | 2.01 (0.02) | 3.85 |
| 48 h | 1.47 | 1.51 (0.01) | 3.68 |
| 72 h | 1.52 | 1.52 (0.01) | 3.66 |

TABLE 7

Average CIE (1976) L*a*b values and standard error of the mean (sem) of deep fried carrot slices during 24 hours fermentation with the *Lactobacillus* strain NCIMB 40450, NCDO 1193 or NCDO 1752.

| Fermentation period | L* (sem) | a* (sem) | b* (sem) |
|---|---|---|---|
| No rinsing | | | |
| 0 h | 44.9 (2.3) | 10.1 (1.1) | 15.8 (3.3) |
| 24 h | 50.4 (1.7) | 12.6 (0.6) | 24.4 (2.5) |
| After rinsing | | | |
| 0 h | 47.6 (2.9) | 11.7 (1.4) | 20.3 (4.2) |
| 24 h | 51.3 (1.8) | 12.1 (0.2) | 26.5 (3.3) |

Example 3 - Evaluation of $\beta$-carotene in carrots

Method

Beta-carotene of carrots and carrot chips were analyzed by HPLC according to the method of Craft and Wise (J. Chromatogr. 589 (1992) 171-176). Extractions of carrots and carrot chips were performed by tetrahydrofuran according to the method of Bushway and Wilson (Can Inst. Food Sci Technol. 15 (1982) 165-169). Chips extracts were eluted through Sep-Pack Al-columns to reduce fat content prior to injection on the HPLC column. Internal standards were used for quantification. The results are given in Table 8 below.

TABLE 8

| | µg/g wet weight | | Retinol equiv./g |
|---|---|---|---|
| | alpha-carotene | beta-carotene | |
| Fresh carrots | 32.6 | 73.0 | 14.9 |
| Fermented carrots | 32.1 | 79.2 | 15.9 |
| Carrot chips (new) | 163.6 | 382.1 | 91.1 |
| Carrot chips (6 months) | 136.1 | 514.5 | 106.1 |

The retinol equivalents were calculated according to the formula:

Total retinol equiv. = 1/6 (µg beta-carotene)
+ 1/12 (µg other provitamin A carotenoids)

The recommended adult daily allowance is 1000 retinol equivalents which is provided by either about 70 g of fresh carrots, or about 10 g of carrot chips. Retinol equivalents are well retained in carrot chips during storage although the best results are obtained with dark, cold and low oxygen storage conditions. (The stored chips were from different carrots than the new chips). In fresh and fermented carrots alpha- and beta-carotene were the only carotenoids. In chips a third component was detected which is likely to be an isomeric form of beta-carotene. The increases in retinol equivalents during processing are mainly caused by the lowering of the water content. A small increase is also due to the loss of sugar during fermentation.

Carotene content may also be calculated on a water and fat free base:

TABLE 9

| | μg/g dry, fat free weight | | Retinol equiv./g |
|---|---|---|---|
| | alpha-carotene | beta-carotene | |
| Fresh carrots | 289.3 | 647.7 | 132.0 |
| Fermented carrots | 375.0 | 926.6 | 185.7 |
| Carrot chips (new) | 324.9 | 758.7 | 180.9 |

As is seen less than 3% of total retinol equivalents are lost during processing of carrot chips.

Example 4 - The influence of brine composition on the quality of carrot crisps

Carrots of the Fontana variety were treated as described in Example 2. Carrot slices were mixed well and weighed into batches of 150.0g. Each batch was placed into a small jar and covered with 200 ml of a brine. Different compositions of brine were tested. To ensure standardised conditions, brines were concentrated by a factor of 2 and then mixed 1:1 with water diluted cell suspension ($2x10^7$ cells/ml, measured at $A_{600}$ and evaluated from a standard curve) or water containing 10 μg chloramphenicol/ml (non fermented control). The brines used are shown in Table 10.

TABLE 10

| Brines used for the production of fermented carrot crisps | | | |
|---|---|---|---|
| No. | NaCl (mM) | $CaCl_2$ (mM) | Osmolarity (M) |
| 1 | 0 | 0 | 0 (hypotonic) |
| 2 | 155 (0.9%) | 0 | 0.31 (isotonic) |
| 3 | 513 (3%) | 0 | 1.26 (hypertonic) |
| 4 | 0 | 50 | 0.15 (hypotonic) |
| 5 | 0 | 103 | 0.31 (isotonic) |
| 6 | 0 | 420 | 1.26 (hypertonic) |
| 7 | 80 | 50 | 0.31 (isotonic) |
| 8 | 513 (3%) | 50 | 1.41 (hypertonic) |
| 9 | 257 | 300 | 1.41 (hypertonic) |

Lactobacillus strain NCIMB 40450, deposited at the National Collection of Industrial and Marine Bacteria, was used in all experiments. Cells were grown in MRS Broth, harvested while in logarithmic growth by centrifugation, and resuspended in water.

Fermentation was carried out in small jars each containing 150.0 g carrot covered with 200 ml brine. The jars were kept at ambient temperature. Fermentation was followed by measuring the pH in the brine, using a Beckman 3560 Digital pH Meter equipped with a glass electrode.

In an additional experiment the same experimental design was used, testing 6 different concentrations of NaCl (0, 0.45, 0.9, 3, 6 and 8%).

Samples from each brine were taken after 24 and 48 hours. The contents of 2 jars (fermented and non fermented) were deep fried, the resulting carrot crisps weighed and fat, dry matter and colour were measured. Samples of carrots and brine for sugar analysis were taken from two other jars, and kept at -20°C until they could be analyzed. The taste and texture of the fermented chips was described in a sensory evaluation.

Glucose, fructose and sucrose were determined by HPLC as described in Example 2.

Palm oil (melting point 20°C) was heated to 165°C in a Hetotherm 01 DBT oil bath (Heto Lab Equipment A/S, Birkerød, Denmark). Portions of 150 g carrot slices were deep fried until there were no visual bubbles due to residual water. Frying time was monitored by a stop watch.

CIE 1976 (L*a*b) colour parameters were obtained using a Hunterlab LabScan II Sphere Spectrocolorimeter as described in Example 2.

Samples were crushed in a Moulinette food processor for 30 seconds, portions of 2 g were transferred to NMR-film, weighed, dried at 105°C for 20 - 22 hours, cooled in a desiccator and weighed again for dry matter determination.

For determination of fat content in the crisps, samples were packed in the NMR-film immediately after weighing, put into test tubes, incubated at 70°C for 1 hour and measured using a Bruker Minispec PC 120 (Bruker Analytische Messtechnik, Rheinstetten, FRG). Values were evaluated from a standard curve.

The carrot chips were grouped according to taste (pleasing, off taste, bitter and burnt) and texture (crisp, tough) by two members of the lab.

RESULTS

The sugar content in carrot slices are reduced during fermentation due to the reduction of fermentable sugars to lactic acid, lowering the pH of the brine. The sugar levels are to some extent also affected by the osmolarity of the brine, as illustrated in Figure 5, which shows total concentration of the reducing sugars (glucose + fructose) at 0, 24 and 48 hours at different total osmolarities.

The increased sugar levels in the carrot slices with increasing osmolarity at the shortest fermentations may reflect differences in the diffusion rate between the carrot slices and the brine. The effect is reduced at longer fermentation times.

Figures 6a and 6b illustrate the fat content of carrot crisps with regard to the osmolarity of the NaCl and $CaCl_2$ brines, respectively.

With NaCl brine (Figure 6a), the crisps contained 5 - 10% less fat when the osmolarity was increased to 1.26 M. The fermented crisps contained less fat than the non-fermented control.

$CaCl_2$ had the largest effect on the fat content of carrot crisps. A 14 - 21% reduction in fat was achieved for the highest brine concentration as compared to water (Figure 6b). In contrast to NaCl, low concentrations of $CaCl_2$ reduced the fat content of the crisps considerably. No significant differences in fat content between the fermented and non fermented samples were found.

Thus, the fat content of carrot crisps can be greatly influenced by the composition of the brine according to the type of salt and the concentration used.

The yield of carrot crisps was also shown to be significantly influenced by the composition of the brine. The results are illustrated in Figures 7a and 7b which show the yield of carrot crisps with regard to the osmolarity of the NaCl and $CaCl_2$ brines, respectively.

As seen from the figures, the yield is reduced at longer fermentations both using NaCl and $CaCl_2$ brines. Thus the fermentation period should be kept as short as possible in the production of carrot crisps.

The results also show that the use of $CaCl_2$ in the brine reduces the yield of carrot crisps considerably compared to NaCl. These differences in yield can be partly explained by differences in fat content, as seen from Figures 6a and 6b. However, the results also indicate additional effects. While the fat content of the crisps decreased using high concentrations of the salts in the brine, the results (Figure 7a and 7b) indicate an increase in the yield of fermented crisps at the same conditions.

An additional experiment was performed, using 0, 0.45, 0.9, 3.0, 5.0 and 8.0% NaCl in the brine. Results after 48 hours fermentation are illustrated in Figure 8, which shows the yield of carrot crisps at different concentrations of NaCl. The yield increases with NaCl concentration in the brine, thus confirming previous results.

In the sensory evaluation, the following was noted:

a) The fermented crisps were lighter than the non fermented.

b) The brines with high concentrations of $CaCl_2$ gave crisps with an unpleasant, bitter taste.

c) The presence of $CaCl_2$ in the brine had an unfavourable effect on the texture of the crisps, giving tougher crisps than the NaCl samples.

d) Longer fermentations also led to tougher crisps.

Principal component analysis (PCA) is a statistical technique which treats all variables simultaneously (Mardia et al. Multivariate analysis, Academic Press, London (1980)). The data is modelled in terms of a few significant factors, plus errors or residuals. The factors contain the main phenomena or systematic variability present in the data, the residuals represent the variability interpreted as noise. Prior to PCA, the parameters were scaled to have zero mean and one standard deviation i.e. standardized data.

The two first principal components accounted for 27% and 17% i.e. about 44% of the total variance. A third principal component accounting for about 14% of the variance was not included in the interpretations due to difficulty in understanding the information this result represented. The loadings and scores for the first two principal components are presented in Fig. 9 and 10. They confirm the results we have found earlier that the osmolarities and fermentation effects the reducing sugar content. The PCA plots also confirm the relationship between fat content and brine composition, and yield and brine composition. The yield was reduced after fermentation and length of fermentation as can also be easily seen from these plots.

The frying time, dry matter and fat content influence the colour measurements, which we also have seen earlier. The PCA results clarify the connections between the different process parameters which have any influence on the end product.

In Figure 9 the following abbreviations are used:

L, A, B : L*,a*,b* values from the colour measurements.

OSMNACL, OSMTOTAL, OSMCACL2 : Osmolarity of the brines.

| | |
|---|---|
| FERM : | Fermented |
| HOURS: | Hours fermentation |
| FAT : | Percent fat in the carrot crisps |
| TIME : | Frying time |
| DRYMATT : | Percent dry matter |
| REDSUGAR : | Percent reducing sugars (glucose + fructose |
| YIELD : | Percent yield |

In Figure 10 the following code was used to identify the samples:

| | |
|---|---|
| P- : | Brine number |
| -24-, -48- : | hours fermentation/hours in brine |
| -1F : | Non fermented crisps |
| -2F : | Fermented crisps |

Example 5 - Pre-fermented Fried Vegetables

The aim of this experiment was to see whether the conditions used for fermentation and frying of carrot could also be used for other vegetables without any adjustments, leading to an acceptable end product. Fermentation conditions were standardized, and different frying conditions were tried. The vegetables used were carrot, swede and parsnip.

MATERIALS AND METHODS

Carrots (Daucus carota L.) of the Fontana variety, grown for industrial processing, were obtained directly after harvest and stored dark at 2°C until processing (May 1992). Parsnips (Pastinaca sativa L.) of the Sutton Student variety were obtained after storage from a vegetable grocer, and swedes (Brassica napus var napobrassica L.), variety unknown, were obtained from a retail store. The vegetables were washed, mechanically peeled and cut into 1.5 mm thick slices in a Robot Vertical Cutter 2 (Robot Coupe SA, Jackson MS).

Lactobacillus strain NCIMB 40450 was used in the experiments. Cells were grown in Difco Lactobac III MRS Broth (Difco Laboratories, Detroit, MI, USA), harvested in log phase by centrifugation and resuspended in brine (2%(w/v)NaCl).

Fermentation was carried out in small jars each containing 150.0 g vegetable slices. The vegetables were covered with 200 ml brine consisting of 2% (w/v) NaCl preinoculated with cell suspension to $A_{600}$ = 0.1 ($10^7$ cells/ml). The jars were kept at ambient temperature (23°C), and fermentation was followed by measuring the pH in the brine using a Beckman 3560 Digital pH Meter equipped with a glass electrode.

Palm oil (melting point 20°C) was heated to 160°C in an Elframo EB (Elframo Bergamo, Italy) cooking pan. The content of one jar (150.0 g fresh vegetable slices) was fried at a time. The frying time was monitored by a stop watch.

Glucose, fructose and sucrose were determined by HPLC as described in Example 2.

Eight jars of each vegetable were set up for fermentation. Fermentation was followed by pH measurements. After 24 and 48 hours, samples of vegetable slices and brine for sugar determination were taken from one jar and kept at -20°C until analysis. The contents of the three other jars was fried. One sample was deep fried until there was no visible bubbles due to residual water, and frying time was noted. Sample two was predried at 105 ° C for 6 minutes, then fried as described for sample 1 and the time noted. The third sample was first fried using the same frying time as sample two (predried), then dried for 20 minutes at 100 ° C. A fresh sample (150.0 g vegetable slices) was also fried as described, without any drying. All samples were weighed after cooling, and the yield calculated. The vegetable crisps were subjected to sensory evaluation.

RESULTS

The pH in the eight different jars of each vegetable followed each other closely, within 0.1 pH units. However, a large difference in fermentation rate between the vegetables was found. The average pH after 24 and 48 hours fermentation of the different vegetables are shown in Table 11.

TABLE 11

| pH in carrot, swede and parsnips after 24 and 48 hours fermentation | | | |
|---|---|---|---|
| Hours | Carrot | Swede | Parsnips |
| 0 (Brine) | 6.15 | 6.15 | 6.15 |
| 24 | 5.22 | 4.23 | 5.33 |
| 48 | 3.86 | 3.98 | 4.12 |

As can be seen from the table, although the same preinoculated brine was used in all samples, swede fermented at a much faster rate than carrot and parsnip for the first 24 hours. After 48 hours the samples were more equal, but by then the carrot samples had the lowest pH.

The amount of sucrose, glucose and fructose in vegetable slices and brine after 24 and 48 hours fermentation was determined. Sugar content of the vegetable slices are shown in Table 12.

TABLE 12

| Sugar content (g/100 g wet weight) of different vegetable slices after 24 and 48 hours fermentation | | | | |
|---|---|---|---|---|
| Sample | Sucrose | Glucose | Fructose | Total red sugars |
| Carrot 24 h | 1.25 | 1.33 | 1.18 | 2.51 |
| Carrot 48 h | 0.78 | 0.60 | 0.67 | 1.27 |
| Swede 24 h | 0.07 | 1.42 | 0.89 | 2.31 |
| Swede 48 h | 0.08 | 1.12 | 0.80 | 1.92 |
| Parsnip 24 h | 6.03 | 0.42 | 0.36 | 0.78 |
| Parsnip 48 h | 3.47 | 0.22 | 0.23 | 0.45 |

As can be seen when comparing the Tables 11 and 12, the differences in rate and degree of fermentation which was found reflects differences in sugar compositions of these vegetables. In swede, high amounts of the monosaccharides and low amounts of sucrose was found, hence the fast fermentation. In parsnip, the opposite was the case. There were low amounts of glucose and fructose in the parsnip samples, and less efficient fermentation since breakdown of sucrose was required.

In carrot and parsnip, the amount of reducing sugars was reduced to less than 1.5% after 48 hours fermentation. In swede, however, the level of reducing sugars was still a little high (1.92%).

A separate experiment was performed using the same fermentation conditions as described. The swede was fermented at a similar rate and degree as previously, according to pH measurements. The results from sugar analysis of the slices before fermentation, and after 24 hours fermentation with and without rinsing of the slices are shown in Table 13.

TABLE 13

Sugar content of swede slices (g/100 g wet weight) before fermentation, after 24 hours fermentation, and after 24 hours fermentation with rinsing of the slices before analysis

| Sample | Sucrose | Glucose | Fructose | Total red sugars |
|---|---|---|---|---|
| Before | 0.68 | 4.43 | 3.08 | 7.51 |
| 24 h | 0.25 | 1.84 | 1.41 | 3.25 |
| Rinsing | 0.22 | 1.67 | 1.25 | 2.92 |

As seen from Table 13, there is a relatively small difference in total reducing sugars before and after rinsing indicating the removal of sugars on the surface of the slices by fermentation.

Results from the frying of the different samples are given in Table 14.

TABLE 14

Frying time and yield of vegetable crisps

| Sample | | Time (min. sec) | Yield (%) |
|---|---|---|---|
| Carrot (24 hours): | 1 | 3.40 | 16.4 |
| | 2 | 2.10 | 14.5 |
| | 3 | 2.10 | 15.8 |
| Carrot (48 hours): | 1 | 3.25 | 12.4 |
| | 2 | 2.30* | 12.8 |
| | 3 | 2.50 | 12.5 |
| Swede (24 hours): | 1 | 3.35 | 15.3 |
| | 2 | 2.05 | 14.1 |
| | 3 | 2.05 | 14.1 |
| Swede (48 hours): | 1 | 3.50 | 12.4 |
| | 2 | 2.50 | 12.3 |
| | 3 | 2.50 | 12.3 |
| Parsnip (24 hours): | 1 | 3.25 | 29.8 |
| | 2 | 2.00 | 25.7 |
| | 3 | 2.00 | 32.1 |
| Parsnip (48 hours): | 1 | 3.45 | 25.2 |
| | 2 | 2.35 | 23.7 |
| | 3 | 2.35 | 25.6 |
| Fresh samples: | Carrot | 3.45 | 23.3 |
| | Swede | 3.35 | 19.7 |
| | Parsnip | 3.20 | 34.5 |

1: No drying step

2: Pre-frying drying

3: Post-frying drying

(* Frying time not sufficient, sample not quite crisp)

The resulting crisps after frying were evaluated regarding crispness, colour and taste. All samples except one (see footnote to Table 14) had an acceptable crispness, while there was a distinguishuable difference in colour and taste.

All samples where post-frying drying had been used were light in colour and pleasing to the eye. For carrot and swede the 24 hour samples were slightly lighter than the samples fermented for 48 hours. The colour of the other samples was more varied, ranging from medium coloured to dark and very dark. All samples without pre-frying drying were characterised as dark, the fresh samples very dark. This was also reflected in the taste of the crisps, all dark coloured crisps had a slightly burnt to burnt taste. Using a strict acceptance level, all fermented vegetable samples where post-frying had been used gave an acceptable product.

In conclusion, fermentation prior to deep frying can be used also for other vegetables than carrot to give an acceptable deep fried vegetable product. Compared to carrot, there may be differences in rate and differences in rate and degree of fermentation and yield of the end product, reflecting the composition of the raw material.

**Claims**

**1.** A method of producing a fried vegetable product comprising fermenting vegetable matter containing at least 1.5% by weight of reducing sugar and subsequently frying the fermented product.

**2.** A method as claimed in claim 1, wherein said vegetable matter is processed prior to the fermentation step.

**3.** A method as claimed in either of claims 1 and 2 wherein said vegetable is a rhizome or a bulb.

**4.** A method as claimed in any one of claims 1 to 3, wherein said vegetable matter is carrot.

**5.** A method as claimed in any one of claims 1 to 4, wherein lactic acid bacteria are responsible for said fermentation.

**6.** A method as claimed in claim 5 wherein said bacteria are selected from Lactobacillus sp. NCDO 1752, NCDO 1193 and NCIMB 40450.

**7.** A method as claimed in any one of claims 1 to 6 additionally comprising a post-frying drying step.

**8.** A method as claimed in any one of claims 1 to 7, wherein said vegetable matter is fermented in a buffer.

**9.** A method as claimed in any of claims 1 to 7, wherein peeled, sliced carrot is placed into brine inoculated with a culture of Lactobacillus sp., fermentation of said inoculate for two days, washing said carrot in brine or water and frying said washed carrot.

**10.** A method as claimed in any of claims 1 to 9 wherein said vegetable matter is carrot and said fermentation step is selected to achieve a CIE *b value of from 20 to 30 after frying.

**11.** A pre-fermented fried vegetable product produced by the method as claimed in any one of claims 1 to 10, wherein said vegetable matter contained at least 1.5% by weight of reducing sugars immediately prior to the fermentation step.

**12.** Lactobacillus strain NCIMB No. 40450 or variants thereof.

**13.** The use of Lactobacillus strain NCIMB No. 40450 or variants thereof in the method as claimed in any one of claims 1 to 10.

**14.** The use of a $\beta$-carotene-containing pre-fermented fried vegetable product produced according to any one of claims 1 to 10 as a cancer preventative food.

**15.** A method of combatting cancer in the human or non-human animal body, which method comprises the consumption by said body of a $\beta$-carotene-containing pre-fermented fried vegetable produced according to any one of claims 1 to 10.

Fig. 1

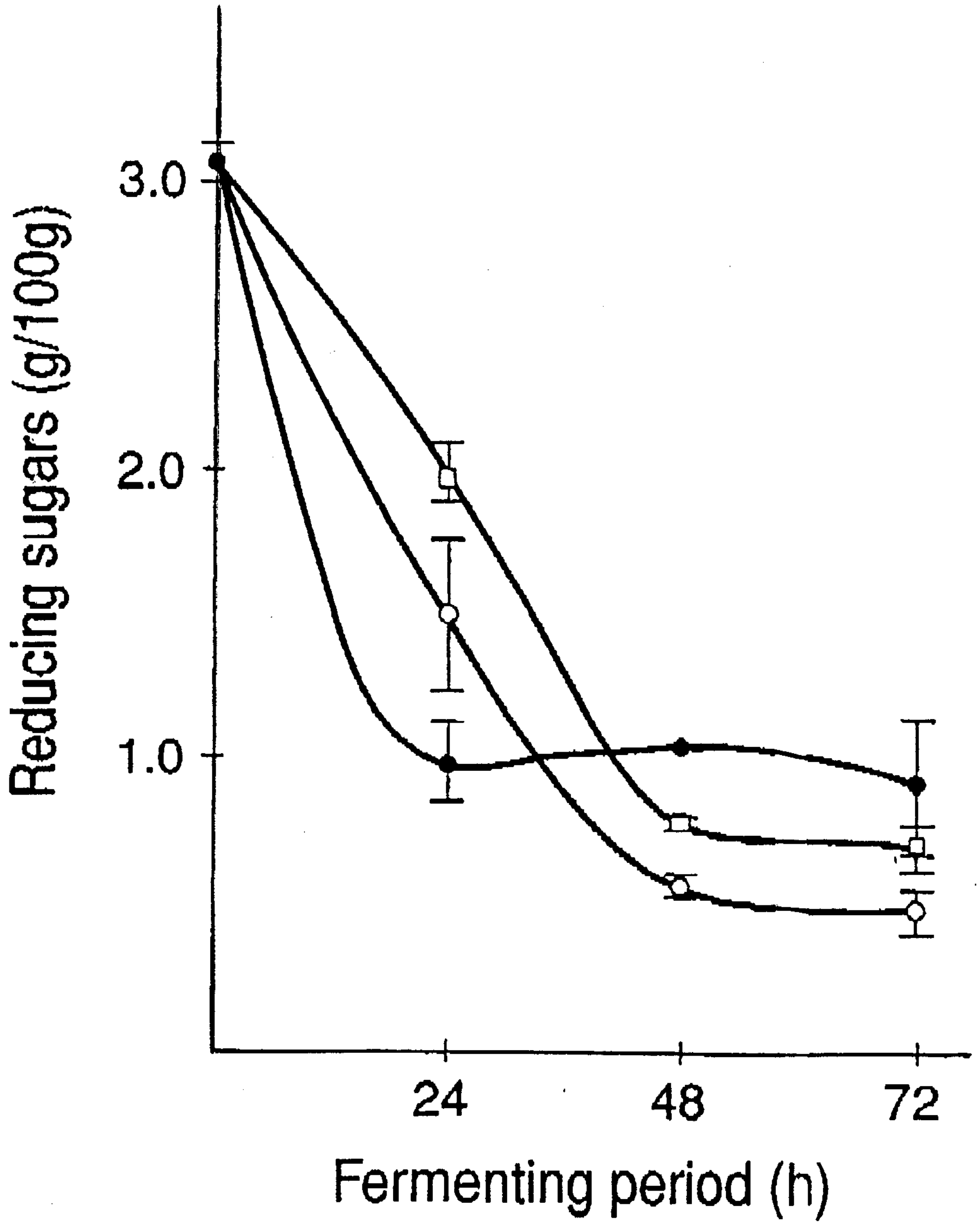


*Lactobacillus* strain NCIMB 40450 (●)

NCDO 1193 (○)

or NCDO 1752 (□).

Fig. 2

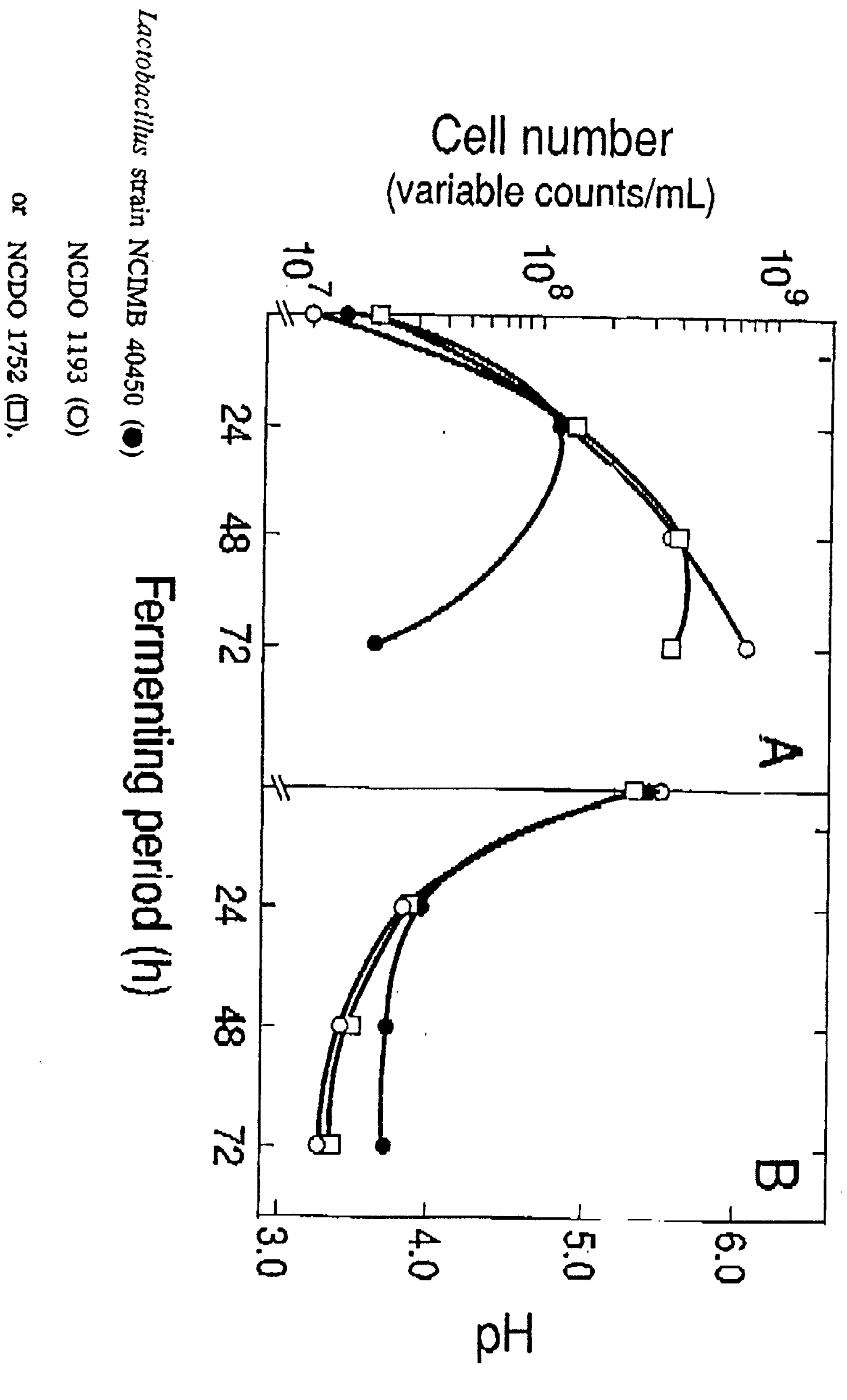
Cell number
(variable counts/mL)
10^7
10^8
10^9
24
48
72
A
B
Fermenting period (h)
3.0
4.0
5.0
6.0
pH
Lactobacillus strain NCIMB 40450 (●)
NCDO 1193 (○)
or NCDO 1752 (□).

Fig. 3

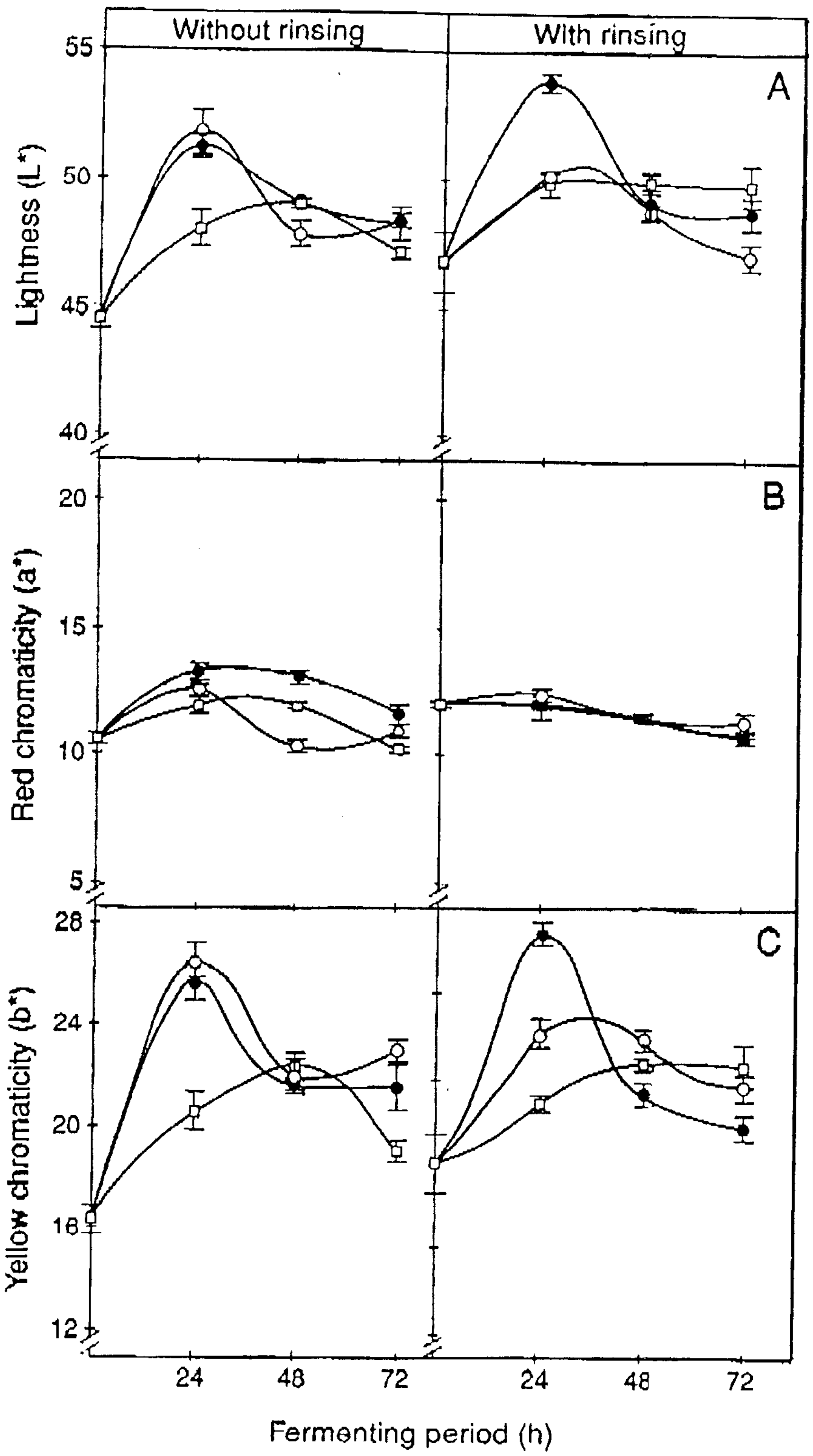


*Lactobacillus* strains NCIMB 40450 (●)
NCDO 1193 (○)
or NCDO 1752 (□)

Fig. 4

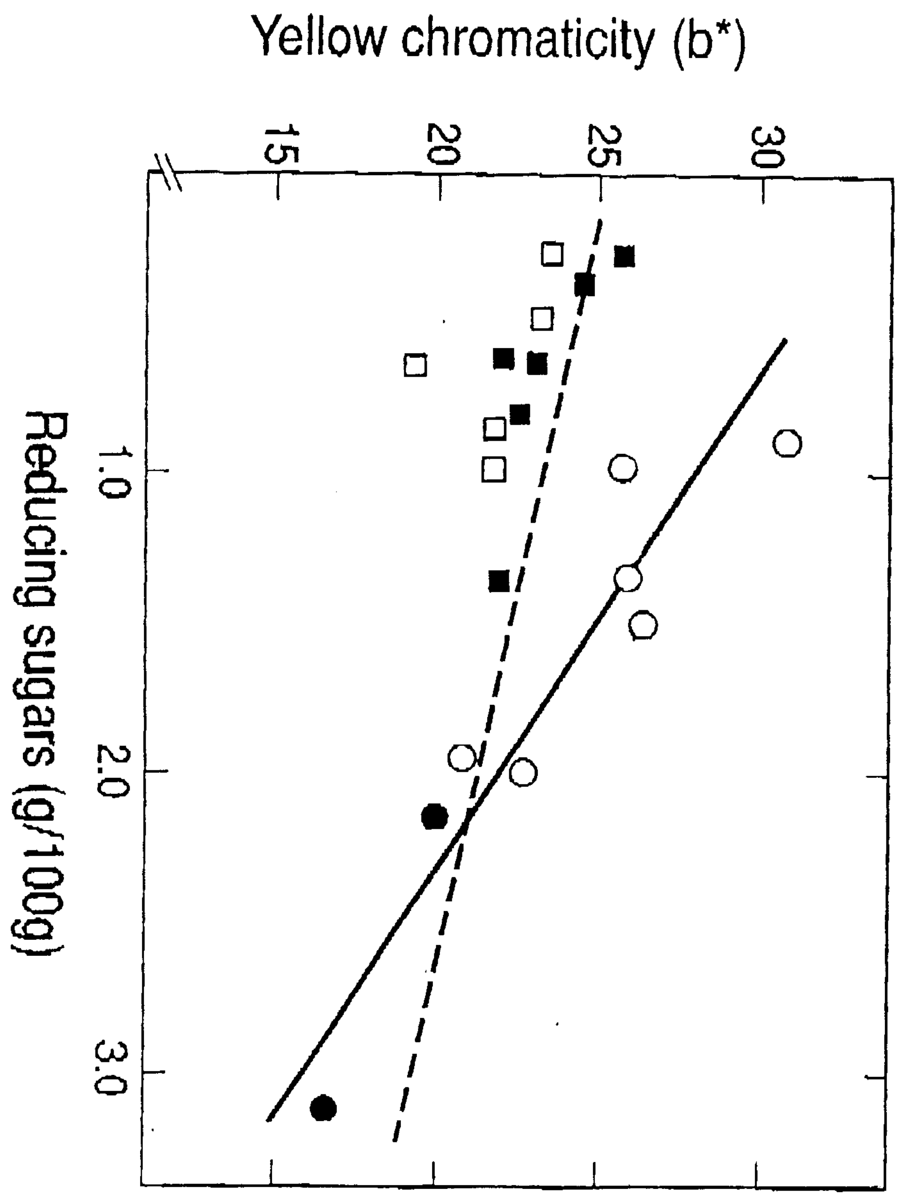


Unfermented (●), fermented 24 h (○), 48 h (■), 72 h (□)
24 h fermentation (—), 24, 48 and 72 h fermentation (--)

FIG. 5

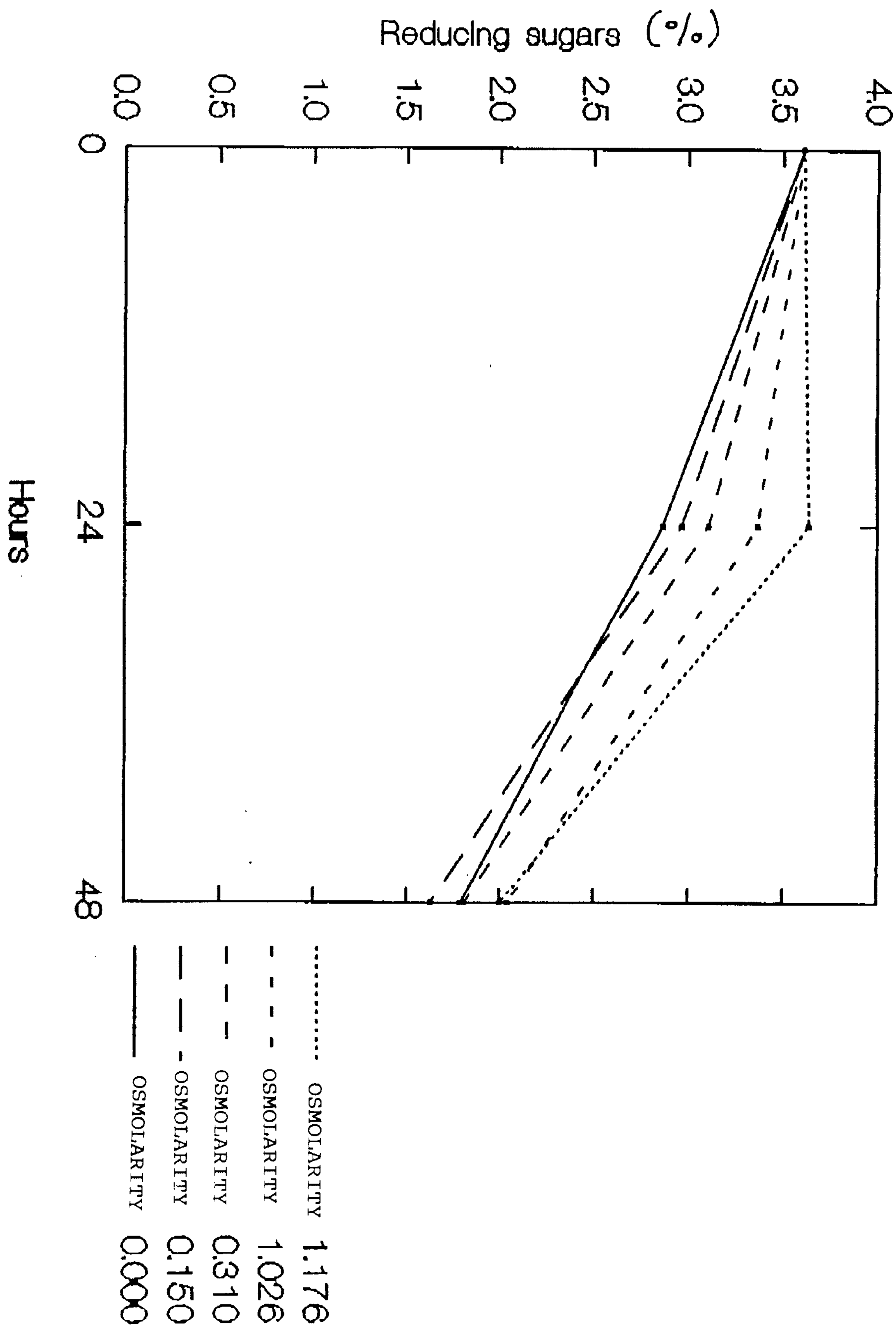
Reducing sugars (%)
0.0
0.5
1.0
1.5
2.0
2.5
3.0
3.5
4.0
Hours
0
24
48
OSMOLARITY 1.176
OSMOLARITY 1.026
OSMOLARITY 0.310
OSMOLARITY 0.150
OSMOLARITY 0.000

FIG. 6a

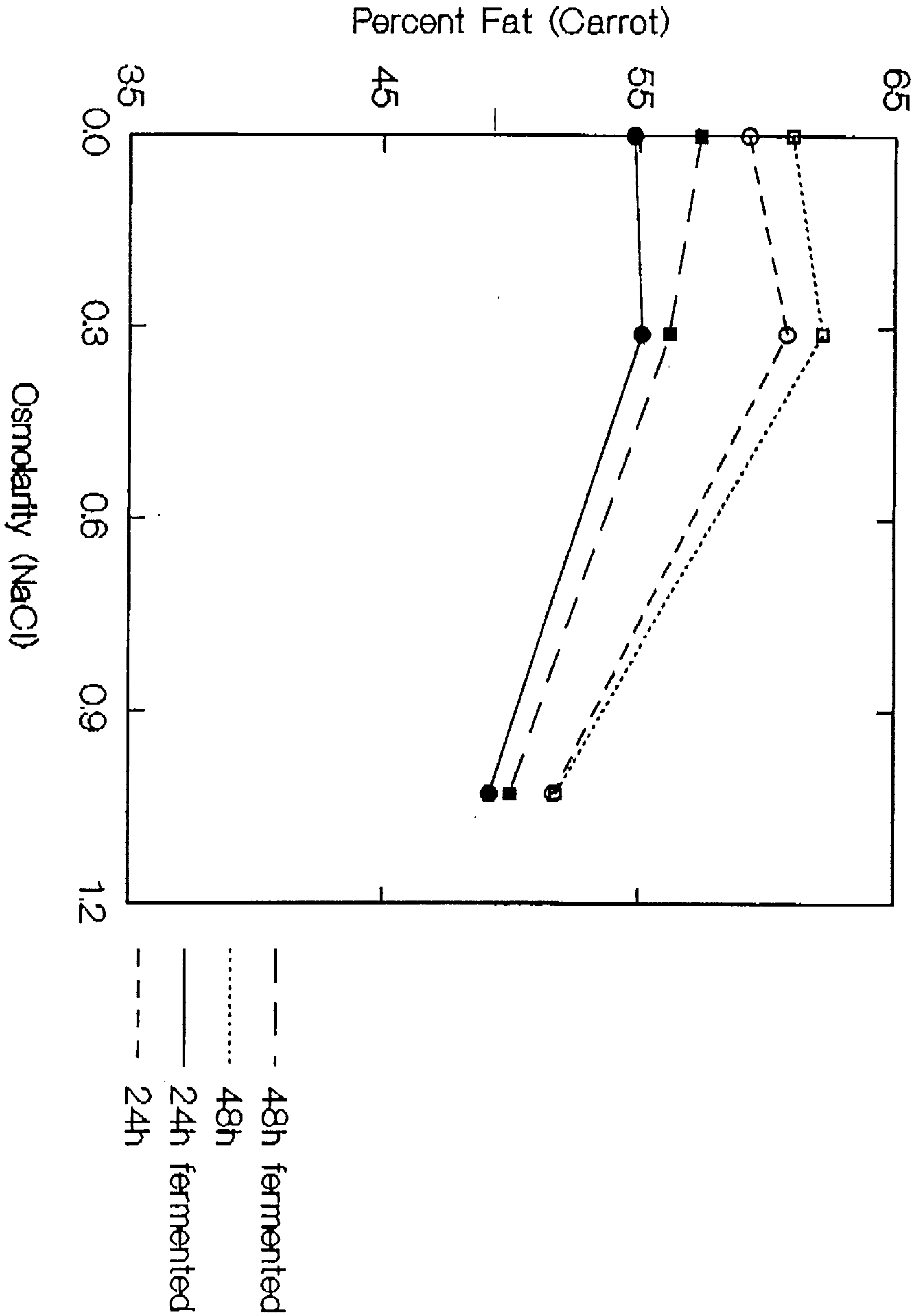
Percent Fat (Carrot)
35
45
55
65
0.0
0.3
0.6
0.9
1.2
Osmolarity (NaCl)
48h fermented
48h
24h fermented
24h

FIG. 6b

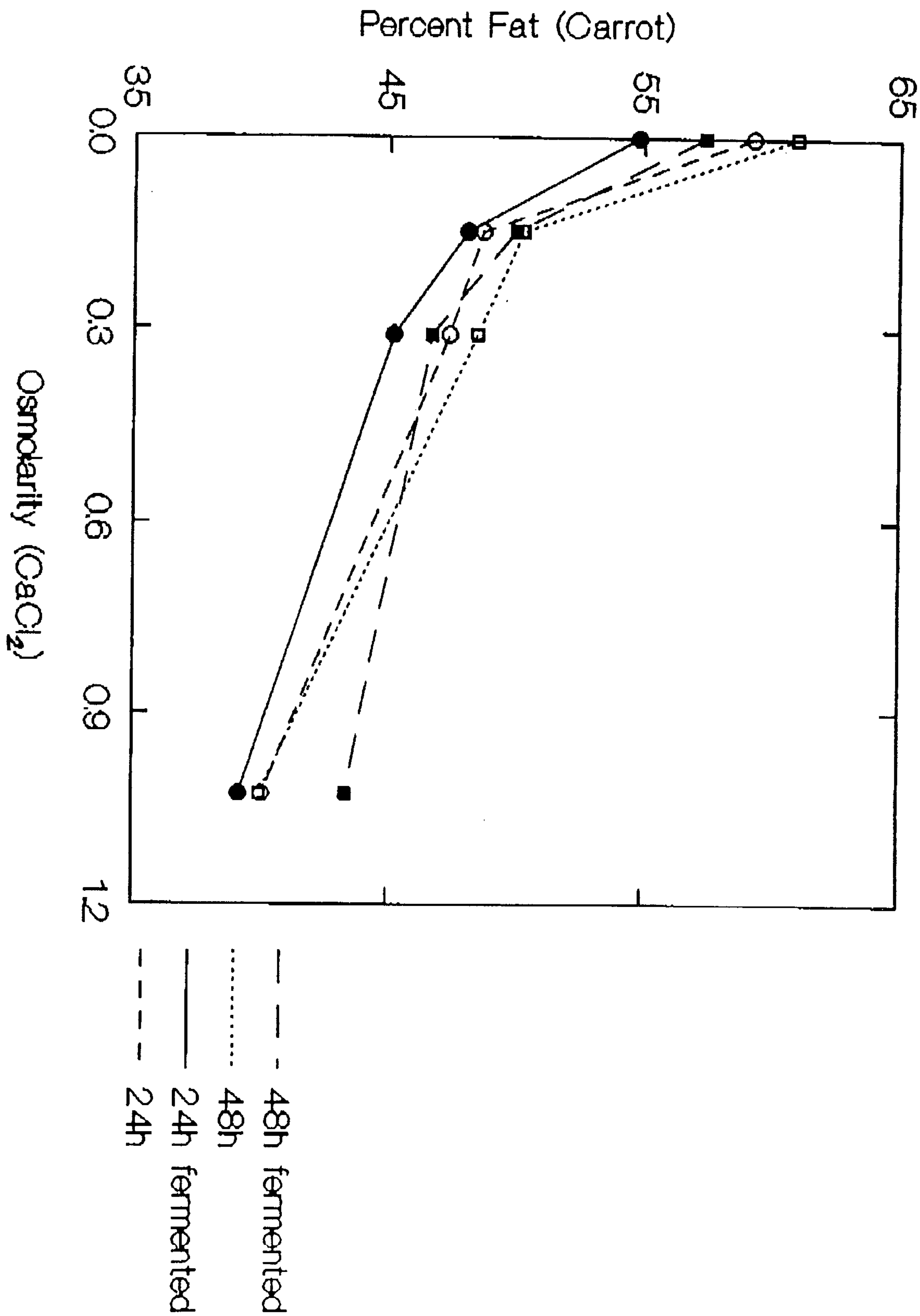
Percent Fat (Carrot)
35
45
55
65
0.0
0.3
0.6
0.9
1.2
Osmolarity ($CaCl_2$)
48h fermented
48h
24h fermented
24h

FIG. 7a

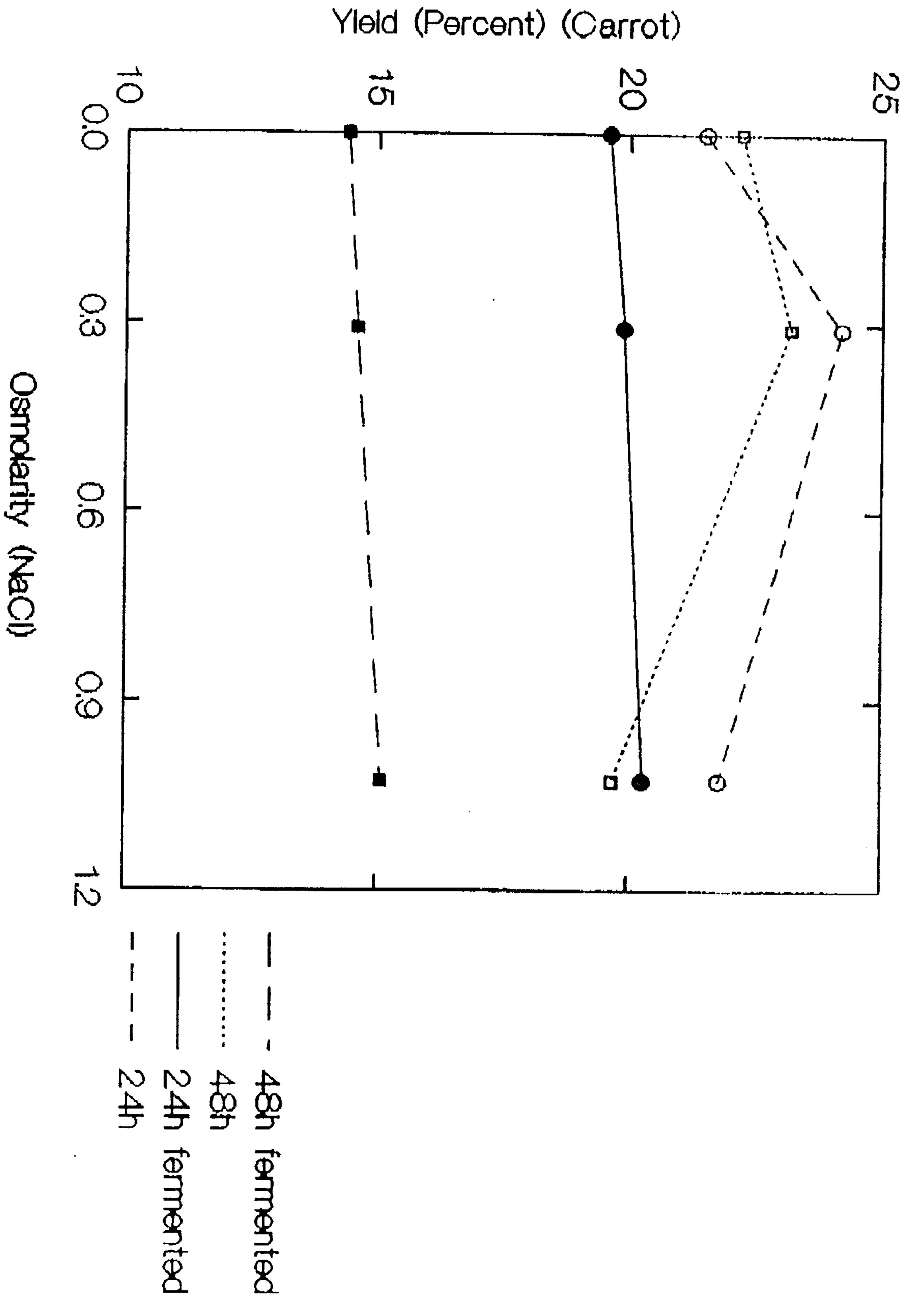
Yield (Percent) (Carrot)
10
15
20
25
0.0
0.3
0.6
0.9
1.2
Osmolarity (NaCl)
48h fermented
48h
24h fermented
24h

FIG.7b

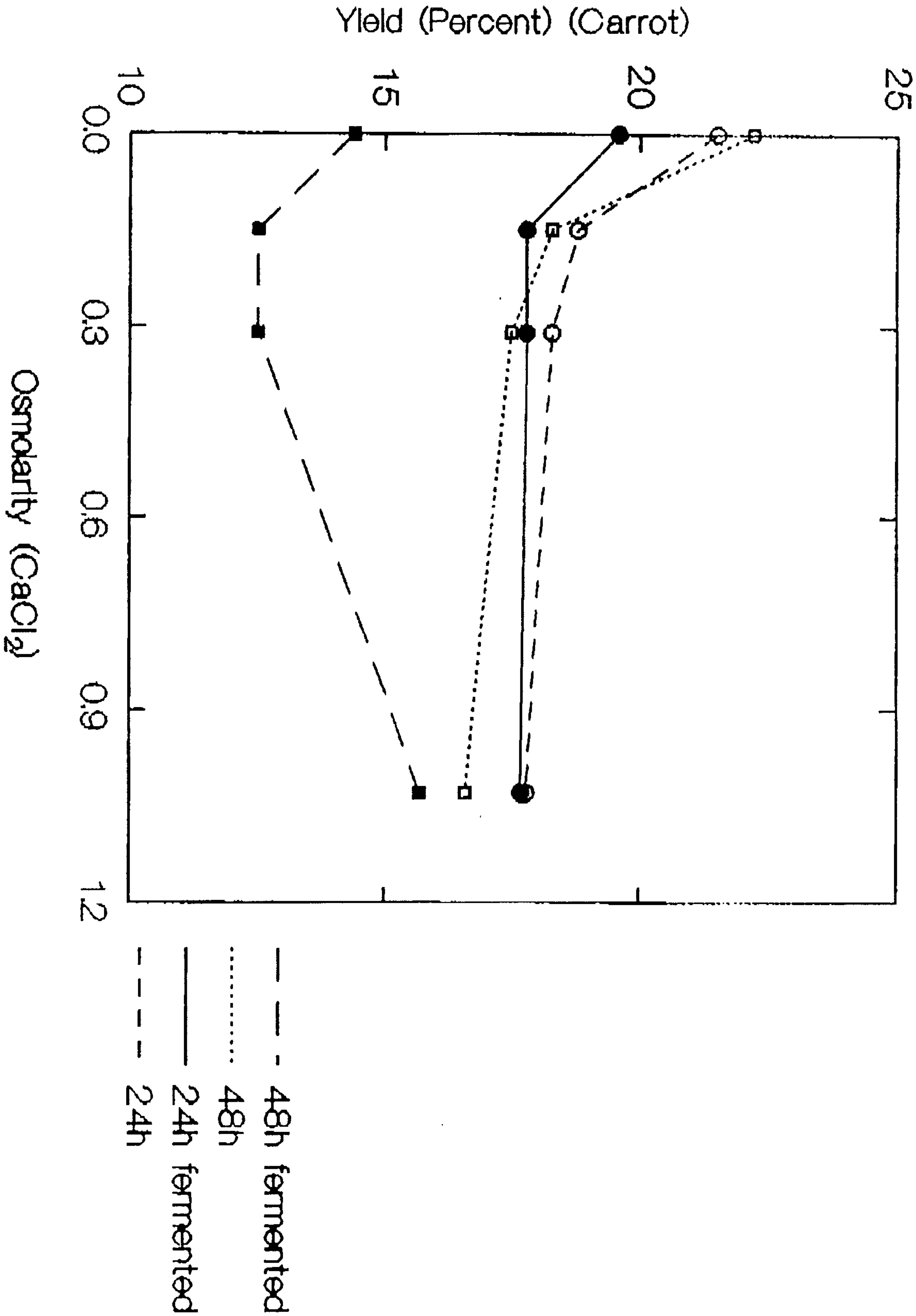
Yield (Percent) (Carrot)
10
15
20
25
0.0
0.3
0.6
0.9
1.2
Osmolarity ($CaCl_2$)
48h fermented
48h
24h fermented
24h

FIG. 8

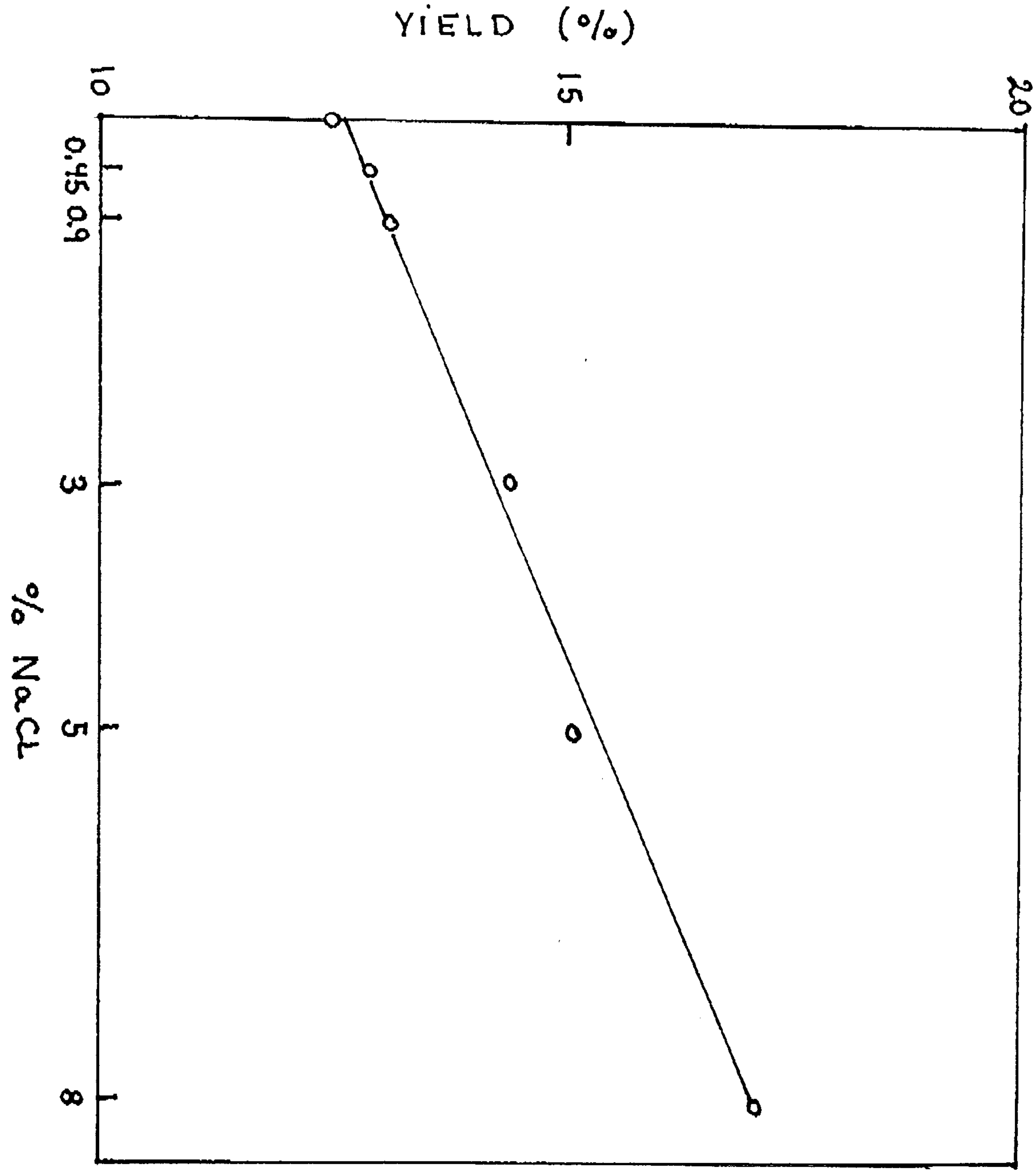

FIG. 9

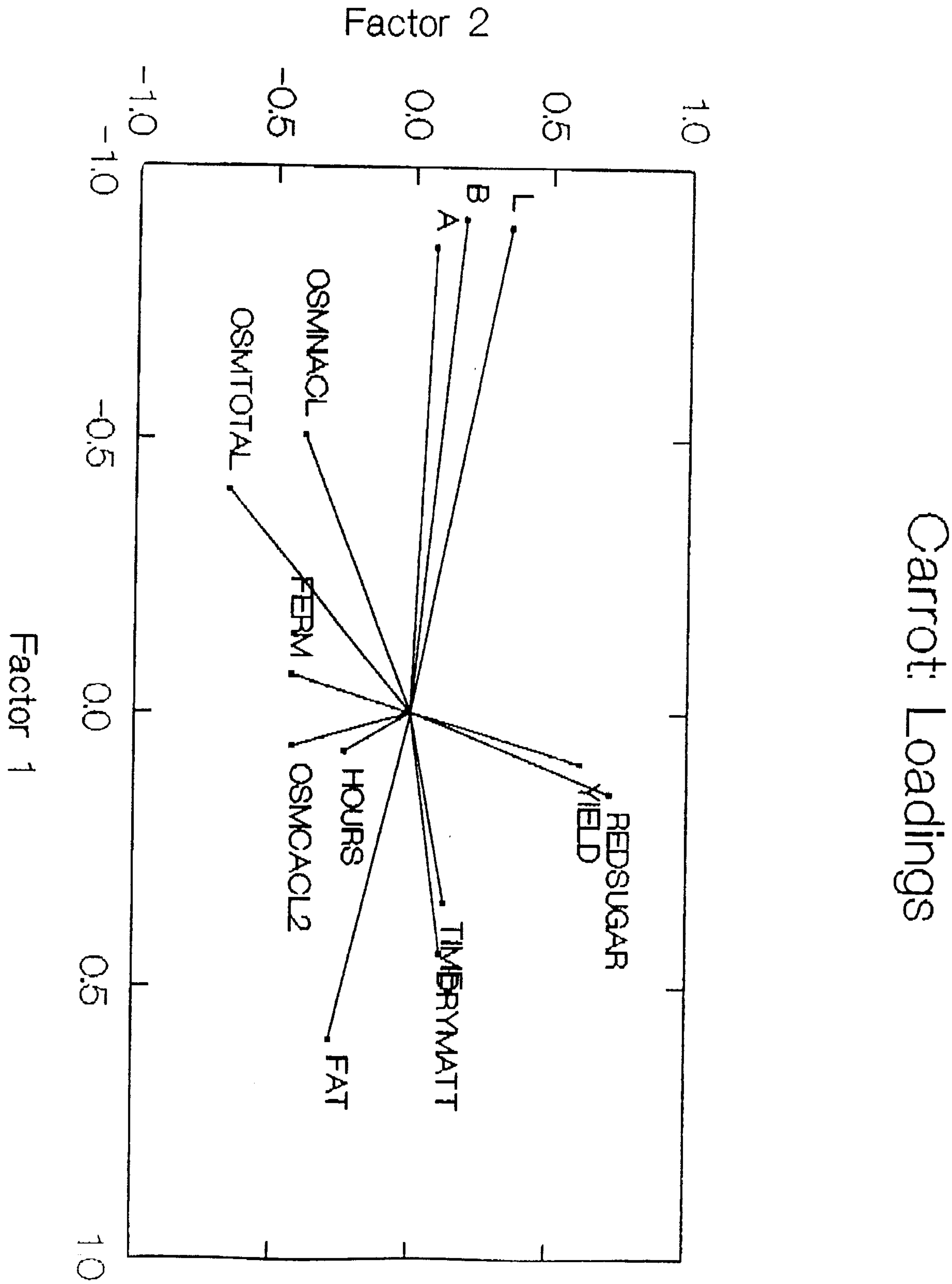
Carrot: Loadings
Factor 2
Factor 1
-1.0
-0.5
0.0
0.5
1.0
L
B
A
OSMNACL
OSMTOTAL
FERM
OSMCACL2
HOURS
FAT
TIME
DRYMATT
YIELD
REDSUGAR

FIG. 10